# EUROPEAN PATENT SPECIFICATION

(11) **EP 4 071 597 B1**
(45) Date of publication and mention of the grant of the patent: **04.11.2026**
(21) Application number: 20895973.4
(22) Date of filing: 04.12.2020
(51) Int. Cl.: G06F 7/58, H04L 9/00

(54) **RANDOM NUMBER GENERATOR FOR DEFENDING AGAINST SUBCHANNEL ATTACK, AND OPERATION METHOD THEREOF**
ZUFALLSZAHLENGENERATOR ZUR ABWEHR VON SUBKANALANGRIFFEN UND BETRIEBSVERFAHREN DAFÜR
GÉNÉRATEUR DE NOMBRES ALÉATOIRES POUR LA DÉFENSE CONTRE UNE ATTAQUE DE SOUS-CANAL, ET SON PROCÉDÉ DE FONCTIONNEMENT

(30) Priority: 06.12.2019 KR 20190161218
(43) Date of publication of application: 12.10.2022
(73) Proprietor: EYL Inc., Yongin-si, Gyeonggi-do 16971 (KR)
(72) Inventor: JEONG, Bu Suk, Yongin-si, Gyeonggi-do 17086 (KR); NAM, Dae Hyun, Seoul 04129 (KR); BAIK, Jung Hyun, Seongnam-si, Gyeonggi-do 13608 (KR); CHO, Seong Joon, Seongnam-si, Gyeonggi-do 13588 (KR); LIM, Tae Jin, Gwangju-si, Gyeonggi-do 12711 (KR)
(74) Representative: Sander, Rolf
(86) International application number: PCT/KR2020/017695
(87) International publication number: WO 2021/112637

(56) References cited:
- WO-A1-02/071204
- JP-B2- 2 842 752
- KR-A- 19990 018 451
- KR-A- 20070 022 262
- KR-A- 20150 026 737
- US-A1- 2017 244 546
- US-A1- 2018 307 835
- PARK JUNGMIN ET AL: "SCR-QRNG: Side-Channel Resistant Design using Quantum Random Number Generator", 2019 IEEE/ACM INTERNATIONAL CONFERENCE ON COMPUTER-AIDED DESIGN (ICCAD), IEEE, 4 November 2019 (2019-11-04), pages 1 - 8, XP033678222
- LUCIANO LODER ET AL: "Towards a Framework to Perform DPA Attack on GALS Pipeline Architectures", INTEGRATED CIRCUITS AND SYSTEMS DESIGN, ACM, 2 PENN PLAZA, SUITE 701 NEW YORK NY 10121-0701 USA, 1 September 2014 (2014-09-01), pages 1 - 7, XP058059145, ISBN: 978-1-4503-3156-2, DOI: 10.1145/2660540.2661001

## Description

### Technical Field

The present disclosure relates to a random number generator for defending against a side-channel attack and a method for operating the generator and more particularly, to a random number generator capable of defending against a side-channel attack using a random frequency generated based on an entropy source of a true random number generator and a method for operating the generator.

### Background Art

A random number generator plays an important role in generating random numbers for encryption keys, initialization values, and side-channel defense in security chips. A high entropy source is needed to generate random numbers, one example of which is a quantum entropy source based on the decay of radioisotopes. However, most entropy sources have a bias, which may require post-processing to alleviate the bias effect and may use a deterministic random number generator to increase the value of random numbers. Also, most entropy sources take physical measurements of the natural environment to produce pulses in proportion to the magnitude of the energy in the measurements; therefore, final output pulses of the entropy source are characterized by their unpredictable period. Suppose pulses with a nondeterministic period are used to generate high-speed random frequencies; then, it may make it difficult to predict a particular instruction within a uniform set of frequencies, which is one of the side-channel attack methods typically used by hackers.

A related prior art is Korean registered patent No. 10-1721168, "Method of operating random pulse generator apparatus using radioisotope."

### SUMMARY

An object of the present disclosure is to provide a random number generator resistant to side-channel attacks from hackers, which generates a random frequency based on an unpredictable entropy source and inputs the random frequency when a microprocessor executes a specific instruction.

A random number generator resistant to side-channel attacks according to one embodiment of the present disclosure comprises an entropy unit generating random pulses, a random frequency clock generator generating random frequencies by receiving random pulses output from the entropy unit, and an MCU externally masking a specific operation or a specific instruction based on a random frequency received from the random frequency clock generator.

A method for operating a random frequency clock generator resistant to side-channel attacks according to one embodiment of the present disclosure comprises generating random pulses by an entropy unit, generating random frequencies by receiving random pulses output from the entropy unit, and masking a specific instruction externally by an MCU based on a random frequency received from the random frequency clock generator.

### ADVANTAGEOUS EFFECTS

The present disclosure provides an effect of making a hacker's side-channel attack difficult by entering a random frequency to the MCU at the time of operating a specific instruction and disturbing the time at which a target operation is executed.

Also, the present disclosure provides a random number generator using radioisotopes capable of generating random numbers at a high rate through a deterministic random number generator.

Also, the present disclosure may be used to implement hiding and masking techniques through a random frequency clock and random numbers, which are countermeasures against side-channel attacks.

### BRIEF DESCRIPTION OF THE DRAWINGS

FIG. 1 illustrates a structure of a random number generator resistant to side-channel attacks according to an embodiment of the present disclosure.
FIG. 2 illustrates a structure of an entropy unit according to an embodiment of the present disclosure.
FIG. 3 illustrates a structure of a random frequency clock generator according to an embodiment of the present disclosure.
FIG. 4 illustrates a simulation result of a random frequency clock generator according to an embodiment of the present disclosure.
FIGS. 5 to 8 illustrate simulation results for varying pulse widths according to an embodiment of the present disclosure.

### DESCRIPTION OF EXEMPLARY EMBODIMENTS

Specific structural or functional descriptions of embodiments according to the concept of the present disclosure described herein are illustrated solely for the purpose of describing embodiments according to the concept of the present disclosure, and embodiments according to the concept of the present disclosure may be embodied in various forms and are not limited to the embodiments described herein.

Since the embodiments based on the concept of the present disclosure may be modified in various ways and may have various other forms, the embodiments will be illustrated in the appended drawings of the present disclosure and described in detail with reference to the drawings. However, it should be understood that the embodiments of the present disclosure are not limited to specific disclosed forms; instead, the embodiments include all of the modifications, equivalents, or substitutes belonging to the technical principles and scope of the present disclosure.

Terms used in the present disclosure are intended only for describing a specific embodiment and are not intended to limit the technical scope of the present disclosure. A singular expression should be understood to indicate a plural expression unless otherwise explicitly stated. The term "include" or "have" is used to indicate existence of an embodied feature, number, step, operation, element, component, or a combination thereof; and should not be understood to preclude the existence or possibility of adding one or more other features, numbers, steps, operations, elements, components, or a combination thereof.

In what follows, embodiments of the present disclosure will be described in detail with reference to appended drawings.

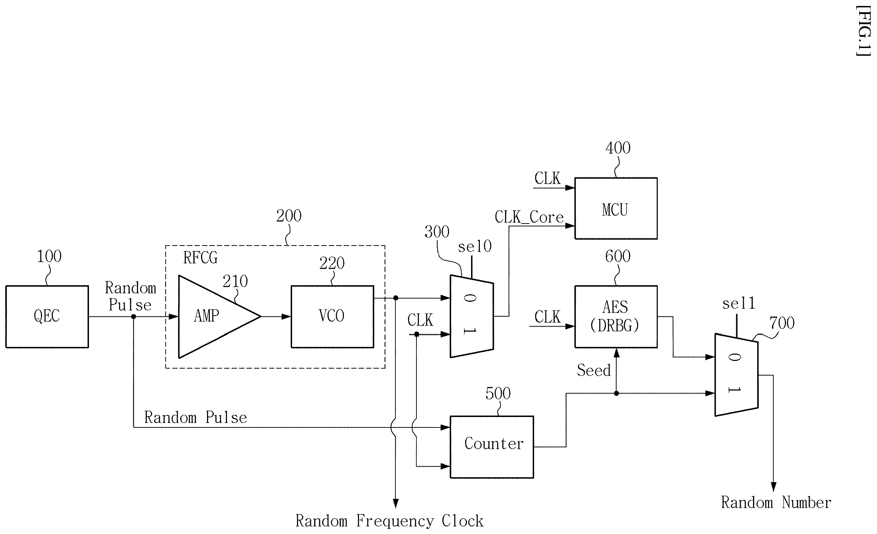

FIG. 1 illustrates a structure of a random number generator resistant to side-channel attacks according to an embodiment of the present disclosure.

Referring to FIG. 1, a random number generator resistant to side-channel attacks comprises an entropy unit 100, a random frequency clock generator 200, a first selector 300, an MCU 400, a counter 500, a random number generating unit 600, and a second selector 700.

The entropy unit 100 generates random pulses having a pulse width determined randomly by alpha particles emitted during the natural decay of radioisotopes. The entropy unit 100 may include a radioisotope emitter and detector, and the pulse width of a random pulse may be determined in proportion to the amount of energy generated due to the collision of one or more alpha particles released from the radioisotope emitter with the radioisotope detector. In other words, pulses with a random pulse width may be generated based on different amounts of energy generated when one or more alpha particles having different amounts of energy collide with the detector or one or more alpha particles having the same amount of energy collide with the detector. The pulse width of random pulses generated by the entropy unit 100 may be a value obtained by multiplying the number of random alpha particles colliding with the detector by the amount of energy of each particle.

The random frequency clock generator 200 receives random pulses output from the entropy unit 100 to generate a random frequency. The random frequency clock generator 200 includes an AMP 210 and a Voltage Controlled Oscillator (VCO) 220. The random frequency clock generator 200 may generate a random frequency based on the pulse signal width of the random pulse and the time difference between the pulse signals. In other words, the random frequency clock generator 200 may generate a frequency as the number of charges accumulated in the capacitor varies according to the width of a random pulse, the initial frequency output to the VCO 220 is changed, and the frequency is decreased in proportion to the number of charges discharged from the capacitor until the next pulse is generated.

The first selector 300 selectively receives a random frequency output from the random frequency clock generator 200 and the reference clock CLK based on a first selection signal sel0 and outputs the selected signal to the random number generating unit 600.

The MCU 400 may be configured by firmware to control the first selection signal sel0 of the first selector and a second selection signal sell of the second selector. The MCU 400 may enable the first selection signal of the first selector for external masking when a specific operation or a specific instruction is executed and may receive a random frequency output from the random frequency clock generator 200 to execute a specific operation or a specific instruction. In other words, if the MCU 400 executes a specific instruction when the duty cycle is fixed, a hacker may easily make a side-channel attack; however, when the timing is varied by a random frequency, the hacker may not make the side-channel attack since it is not possible to know whether the MCU executes an instruction.

The counter 500 receives random pulses output from the entropy unit 100 and outputs a random number seed. The counter 500 may generate a random number by measuring the time between the random pulses. The counter 500 may provide the generated random number to the random number generating unit 500 so that the provided random number is used as a seed for generating random numbers.

The random number generating unit 600 may be a deterministic random bit generator (DRBG). The present disclosure employs the AES-CTR DRBG approved by NIST. However, the present disclosure is not limited to the specific selection and may employ a different hash function or HMAC-DRBG.

The second selector 700 outputs at least one of the random number output from the random number generating unit 600 and the random number output from the counter 400 based on the second selection signal sell.

In other words, the random frequency output from the random frequency clock generator 200 may be used to implement a hiding technique, which is a countermeasure against the side-channel attack, while the random number output from the second selector may be used to implement a masking technique, which is a countermeasure against the side-channel attack.

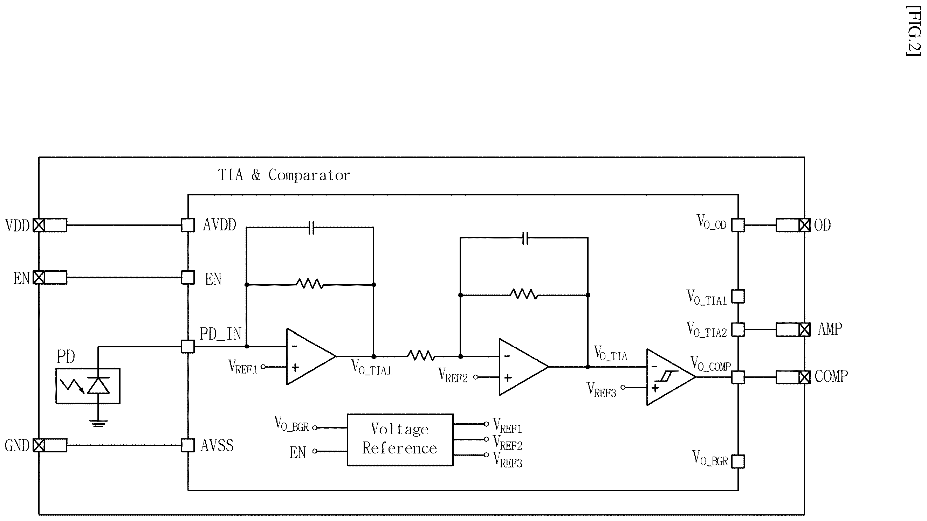

FIG. 2 illustrates a structure of an entropy unit according to an embodiment of the present disclosure.

Referring to FIG. 2, the entropy unit 100 comprises a photodiode for detecting alpha particles, an amplifier, and a comparator. Alpha particles may be detected by a CMOS-type photodiode (PD), where the reverse bias leakage current of the PD is less than 1 nA, and a photocurrent of 1 *µ*A may be typically generated when the alpha particles are absorbed in the depletion region of the PD. The amplifier may be a transimpedance amplifier (TIA), which may amplify and detect a very low-level current due to the absorption of alpha particles and may perform amplification in two steps. The transimpedance gain and unity-gain bandwidth of a first TIA may be 10 MΩ and 10 MHz, respectively, and the gain of a second TIA may be set to 10. The comparator may have a reference voltage of 0.3 V and convert the amplified voltage from the transimpedance amplifier (TIA) to the analog pulse signal V_{O_COMP}, called random pulses. ${V}_{O_COMP} = \left\{\begin{matrix}1 & if {V}_{O_TIA} \leq {V}_{REF 3} \\ 0 & if {V}_{O_TIA} > {V}_{REF 3}\end{matrix}.\right.$

In other words, the entropy unit 100 finally generates a random pulse when alpha particles caused by the radioisotope decay are detected.

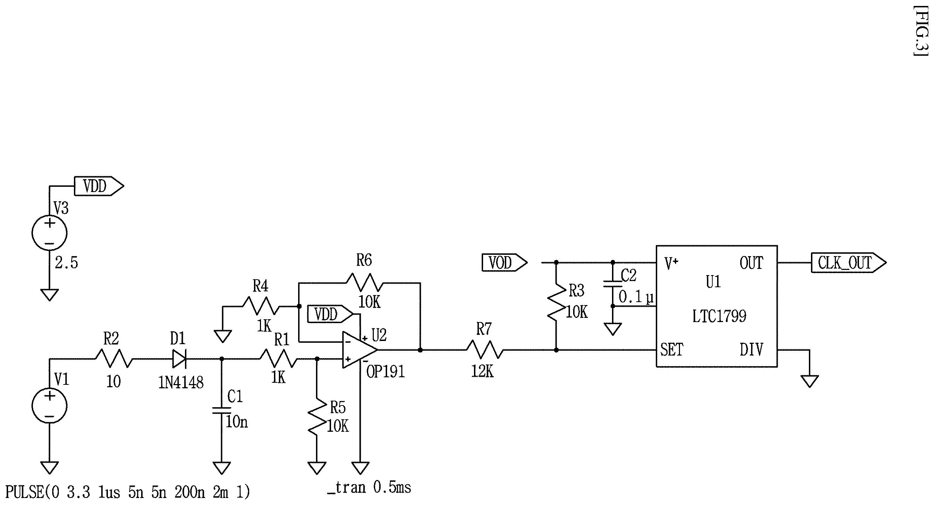

FIG. 3 illustrates a structure of a random frequency clock generator according to an embodiment of the present disclosure.

Referring to FIG. 3, a structure of a random frequency clock generator is illustrated. V1 represents the analog pulse of the entropy unit and is connected to a low-pass filter consisting of a register R2, a capacitor C1, and a switching diode D1. During the positive pulse period, the capacitor C1 may be charged with a time constant τ1 = R2·C1 and may be discharged with a time constant τ2 = (R1 + R5)·C1 until the next positive pulse is generated. A non-inverting amplifier may be used to amplify the charging voltage of the capacitor C1 by the entropy unit 100.

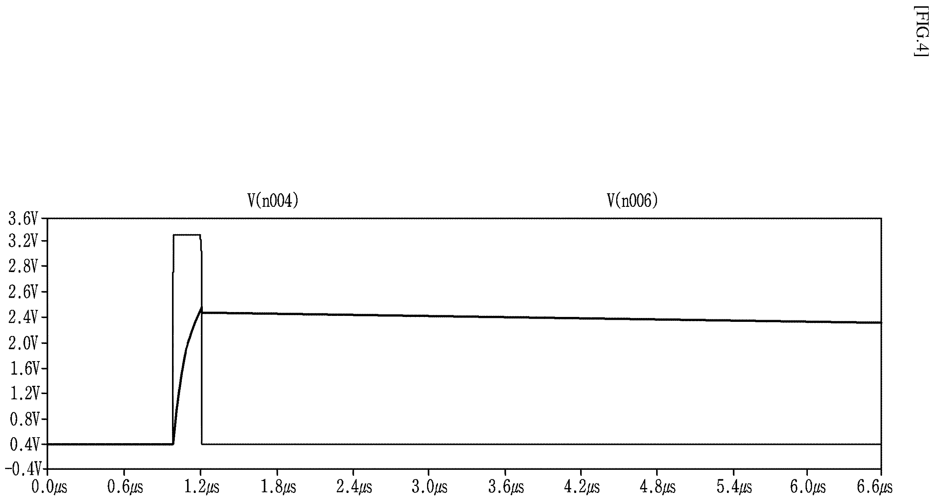

FIG. 4 illustrates a simulation result of a random frequency clock generator according to an embodiment of the present disclosure.

Referring to FIG. 4, the waveform of an analog pulse signal of the entropy unit 100, the voltage of C1, and the clock frequency changed by the amplified voltage and the amplified current are illustrated. The width of a positive pulse and the width of a negative pulse may determine the frequency range of the clock during two successive pulses.

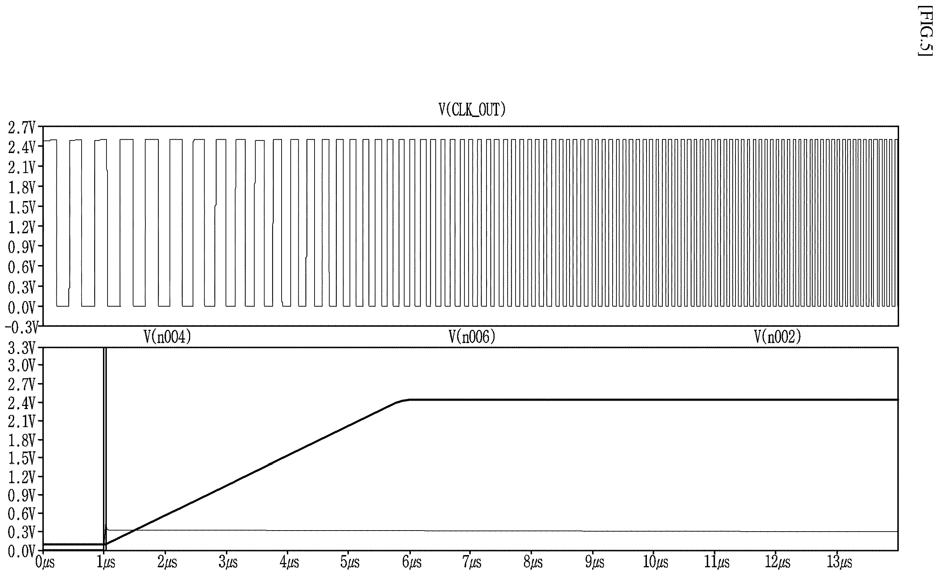

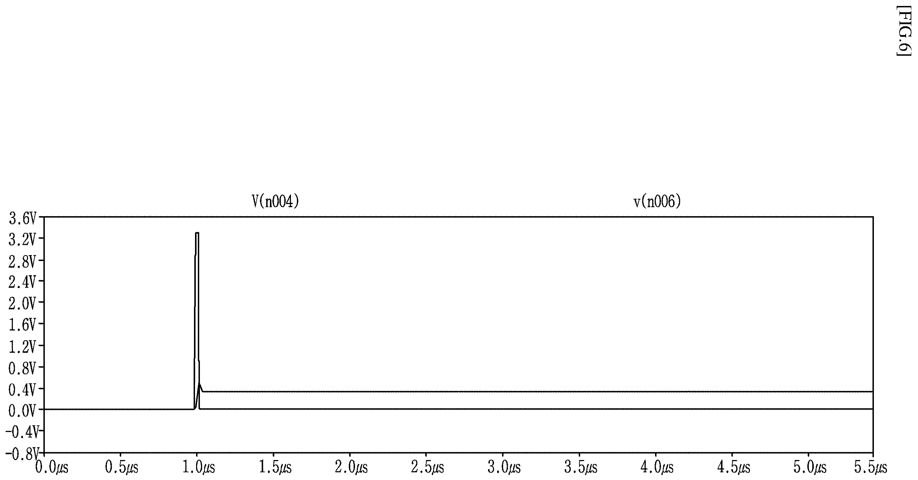

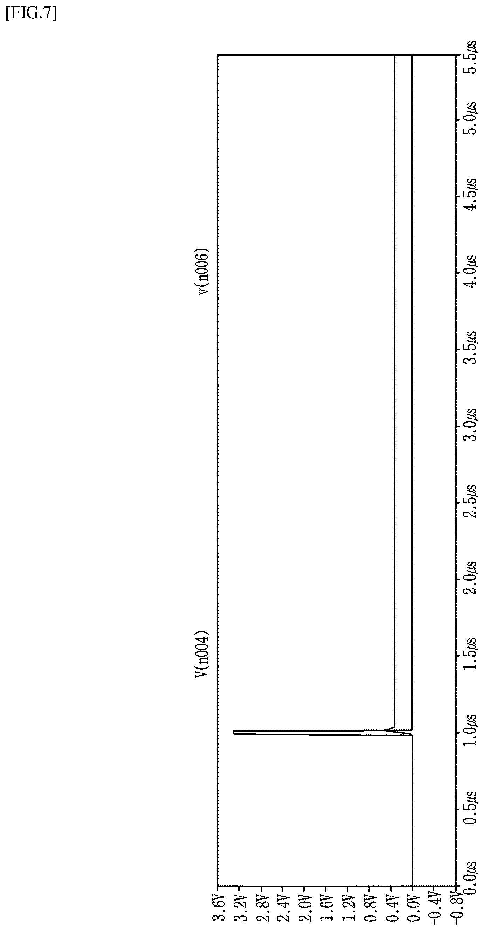

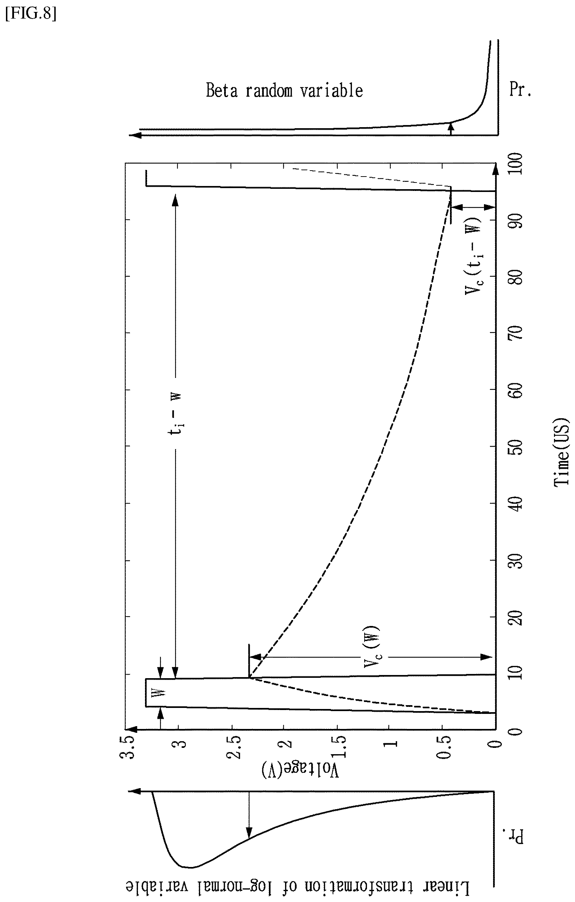

FIGS. 5 to 8 illustrate simulation results for varying pulse widths according to an embodiment of the present disclosure. FIG. 5 illustrates a 2.4 V charge voltage of a clock generated by the pulses having a pulse width of 200 ns, and FIG. 6 illustrates the FFT result of the clock generated by the pulses having a pulse width of 200 ns. FIG. 7 illustrates a 0.4 V charge voltage of a clock generated by the pulses having a pulse width of 20 ns, and FIG. 8 illustrates the FFT result of the clock generated by the pulses having a pulse width of 20 ns. In other words, the figures show the charge voltages of clocks generated due to two different random pulse widths (200 ns and 20 ns), which determine the frequency range of the generated clocks and FFT results of the clocks, where the base frequency of the generated clock may become smaller as the charged voltage gets smaller.

The present disclosure has been described with reference to the embodiments illustrated in the appended drawings. However, the descriptions relate only to illustrative examples, and it should be clearly understood by those skilled in the art to which the present disclosure belongs that various modifications of the embodiments and other equivalent embodiments may be implemented from the descriptions. Therefore, the actual scope of technical protection of the present disclosure should be determined by the subject matters defined by the appended claims.

## Claims

1. A random number generator resistant to side-channel attacks, the random number generator comprising:
an entropy unit (100) configured to generate random pulses;
a random frequency clock generator (200) configured to generate random frequencies by receiving random pulses output from the entropy unit;
an MCU (400) configured to externally mask a specific operation or a specific instruction based on a random frequency received from the random frequency clock generator; and
a first selector (300) configured to selectively output a random frequency output from the random frequency clock generator (200) and a reference clock to the MCU (400) according to a first selection signal,
wherein the MCU (400) configured to enable the first selection signal of the first selector (300) for external masking when a specific operation or a specific instruction is executed and receive a random frequency output from the random frequency clock generator (200) to execute the specific operation or the specific instruction so that a timing of the execution of the specific operation or the specific instruction is varied by the random frequency.

2. The random number generator of claim 1, further including:
a counter (500) configured to output a random number based on a random pulse output from the entropy unit.

3. The random number generator of claim 2, further including:
a second selector (700) configured to selectively output one of a random number output from a random number generating unit and a random number output from the counter according to a second selection signal.

4. A method for operating the random number generator resistant to side-channel attacks of claim 1, the method comprising:
(a) generating random pulses by the entropy unit (100);
(b) generating random frequencies by receiving random pulses output from the entropy unit by the random frequency clock generator (200); and
(c) selectively outputting a random frequency output from the random frequency clock generator (200) and a reference clock to the MCU (400) according to a first selection signal; and
(d) masking a specific instruction externally by an MCU (400) based on a random frequency received from the random frequency clock generator (200).

## Patentansprüche

1. Zufallszahlengenerator, der resistent gegenüber Seitenkanalangriffen ist, wobei der Zufallszahlengenerator Folgendes umfasst:
eine Entropieeinheit (100), die dazu konfiguriert ist, Zufallsimpulse zu erzeugen;
einen Zufallsfrequenztaktgenerator (200), der dazu konfiguriert ist, Zufallsfrequenzen durch Empfangen von Zufallsimpulsen zu erzeugen, die von der Entropieeinheit ausgegeben werden;
eine MCU (400), die dazu konfiguriert ist, eine spezifische Operation oder eine spezifische Anweisung basierend auf einer Zufallsfrequenz, die von dem Zufallsfrequenztaktgenerator empfangen wird, extern zu maskieren; und
einen ersten Selektor (300), der dazu konfiguriert ist, eine Zufallsfrequenz, die von dem Zufallsfrequenztaktgenerator (200) ausgegeben wird, und einen Referenztakt an die MCU (400) gemäß einem ersten Selektionssignal selektiv auszugeben,
wobei die MCU (400) dazu konfiguriert ist, das erste Selektionssignal des ersten Selektors (300) für externe Maskierung zu aktivieren, wenn eine spezifische Operation oder eine spezifische Anweisung ausgeführt wird, und eine Zufallsfrequenz, die von dem Zufallsfrequenztaktgenerator (200) ausgegeben wird, zu empfangen, um die spezifische Operation oder die spezifische Anweisung auszuführen, sodass ein Zeitpunkt der Ausführung der spezifischen Operation oder der spezifischen Anweisung durch die Zufallsfrequenz variiert wird.

2. Zufallszahlengenerator nach Anspruch 1, ferner beinhaltend:
einen Zähler (500), der dazu konfiguriert ist, eine Zufallszahl basierend auf einem Zufallsimpuls, der von der Entropieeinheit ausgegeben wird, auszugeben.

3. Zufallszahlengenerator nach Anspruch 2, ferner beinhaltend:
einen zweiten Selektor (700), der dazu konfiguriert ist, eines von einer Zufallszahl, die von einer Zufallszahlerzeugungseinheit ausgegeben wird, und einer Zufallszahl, die von dem Zähler ausgegeben wird, gemäß einem zweiten Selektionssignal selektiv auszugeben.

4. Verfahren zum Betreiben des Zufallszahlengenerators, der resistent gegenüber Seitenkanalangriffen ist, nach Anspruch 1, wobei das Verfahren Folgendes umfasst:
(a) Erzeugen von Zufallsimpulsen durch die Entropieeinheit (100);
(b) Erzeugen von Zufallsfrequenzen durch Empfangen von Zufallsimpulsen, die von der Entropieeinheit ausgegeben werden, durch den Zufallsfrequenztaktgenerator (200); und
(c) selektives Ausgeben einer Zufallsfrequenz, die von dem Zufallsfrequenztaktgenerator (200) ausgegeben wird, und eines Referenztakts an die MCU (400) gemäß einem ersten Selektionssignal; und
(d) Maskieren einer spezifischen Anweisung extern durch eine MCU (400) basierend auf einer Zufallsfrequenz, die von dem Zufallsfrequenztaktgenerator (200) empfangen wird.

## Revendications

1. Générateur de nombres aléatoires résistant aux attaques de sous-canal, le générateur de nombres aléatoires comprenant :
une unité d'entropie (100) configurée pour générer des impulsions aléatoires ;
un générateur d'horloge à fréquence aléatoire (200) configuré pour générer des fréquences aléatoires en recevant des impulsions aléatoires sorties de l'unité d'entropie ;
un MCU (400) configuré pour masquer de manière externe une opération spécifique ou une instruction spécifique sur la base d'une fréquence aléatoire reçue du générateur d'horloge à fréquence aléatoire ; et
un premier sélecteur (300) configuré pour sortir sélectivement une sortie à fréquence aléatoire du générateur d'horloge à fréquence aléatoire (200) et une horloge de référence vers le MCU (400) en fonction d'un premier signal de sélection,
dans lequel le MCU (400) est configuré pour activer le premier signal de sélection du premier sélecteur (300) pour un masquage externe lorsqu'une opération spécifique ou une instruction spécifique est exécutée et pour recevoir une sortie à fréquence aléatoire du générateur d'horloge à fréquence aléatoire (200) afin d'exécuter l'opération spécifique ou l'instruction spécifique de sorte qu'une synchronisation de l'exécution de l'opération spécifique ou de l'instruction spécifique varie selon la fréquence aléatoire.

2. Générateur de nombres aléatoires selon la revendication 1, comprenant en outre :
un compteur (500) configuré pour sortir un nombre aléatoire basé sur une sortie d'impulsions aléatoires de l'unité d'entropie.

3. Générateur de nombres aléatoires selon la revendication 2, comprenant en outre :
un second sélecteur (700) configuré pour sortir sélectivement l'un d'un nombre aléatoire sorti par une unité de génération de nombres aléatoires et d'un nombre aléatoire sorti par le compteur en fonction d'un deuxième signal de sélection.

4. Procédé de fonctionnement du générateur de nombres aléatoires résistant aux attaques de sous-canal selon la revendication 1, le procédé comprenant :
(a) la génération d'impulsions aléatoires par l'unité d'entropie (100) ;
(b) la génération de fréquences aléatoires en recevant des impulsions aléatoires sorties de l'unité d'entropie par le générateur d'horloge à fréquence aléatoire (200) ; et
(c) la sortie sélective d'une fréquence aléatoire sortie du générateur d'horloge à fréquence aléatoire (200) et d'une horloge de référence vers le MCU (400) en fonction d'un premier signal de sélection ; et
(d) le masquage d'une instruction spécifique de manière externe par un MCU (400) sur la base d'une fréquence aléatoire reçue du générateur d'horloge à fréquence aléatoire (200).
